Europäisches Patentamt

European Patent Office

Office européen des brevets

(11) Numéro de publication : **0 018 618**
**B1**

(12)  **FASCICULE DE BREVET EUROPÉEN**

(45) Date de publication du fascicule du brevet :
13.06.84

(21) Numéro de dépôt : **80102281.5**

(22) Date de dépôt : **28.04.80**

(51) Int. Cl.³ : **H 04 J   3/07, H 04 Q  11/04**

(54) **Dispositif de synchronisation de multiplex dans un central de commutation temporelle.**

(30) Priorité : **03.05.79 FR 7911094**

(43) Date de publication de la demande :
**12.11.80 Bulletin 80/23**

(45) Mention de la délivrance du brevet :
**13.06.84 Bulletin 84/24**

(84) Etats contractants désignés :
**BE CH DE FR GB IT LI NL SE**

(56) Documents cités :
**FR-A- 1 529 053**
**FR-A- 2 379 204**
**GB-A-  946 254**
**GB-A-  997 835**
**US-A- 3 867 579**
**COMMUTATION ET ELECTRONIQUE, no. 34, juillet
1971, pages 7-24 Paris, FR. FEUERSTEIN et al.:
"Groupes d'équipements de synchronisation du système de commutation temporelle platon"**

(73) Titulaire : **COMPAGNIE INDUSTRIELLE DES TELE-
COMMUNICATIONS CIT-ALCATEL S.A. dite:**
**12, rue de la Baume**
**F-75008 Paris (FR)**

(72) Inventeur : **Le Dieu, Bernard**
**Rue de Keralsam**
**F-22700 Perros-Guirec (FR)**
Inventeur : **Herledan, Jean-René**
**Kerham Tredrez Locquemeau**
**F-22300 Lannion (FR)**

(74) Mandataire : **Weinmiller, Jürgen et al**
**Zeppelinstrasse 63**
**D-8000 München 80 (DE)**

## Description

L'invention concerne un dispositif de synchronisation de multiplex, reliant un central de commutation temporelle soit à d'autres centraux, qu'ils soient du type à commutation temporelle ou du type électromécanique, soit à des unités de raccordement distantes, appelées satellites, qui regroupent un certain nombre d'abonnés. Un central de commutation temporelle est un central qui transmet des signaux de parole et de signalisation modulés par impulsions codées. Les signaux sont contenus dans des voies temporelles d'une trame et acheminés par des multiplex. Chaque multiplex relié à un central de commutation temporelle provient d'un central, ou d'un satellite, ayant sa propre horloge, dite horloge distante ; le central de commutation temporelle possède sa propre horloge dite horloge locale. Il est bien connu que les horloges distantes et l'horloge locale ne sont pas en phase et qu'elles sont plésiochrones. De plus, il se produit sur les multiplex un phénomène de « gigue » ; la gigue est un défaut introduit par la transmission numérique consistant en une modulation parasite de la position des instants sur lesquels les impulsions sont centrées. C'est pourquoi avant qu'un central de commutation temporelle ne soit à même de traiter les informations en provenance d'un autre central ou d'un satellite, il est nécessaire de resynchroniser, avec l'horloge locale w, les informations entrantes en phase avec l'horloge distante wd.

On connaît déjà des dispositifs de synchronisation, notamment par l'article « Groupement d'équipement de synchronisation du système de commutation temporelle Platon » de MM. D. FEUERSTEIN, J.B. JACOB, R. RENOULIN, et J. GUEZOU, paru dans la Revue COMMUTATION ET ELECTRONIQUE n° 34, Juillet 1971 pages 7 à 24. Les dispositifs connus sont compliqués et résolvent imparfaitement le problème de la gigue, dans le cas où la gigue est elle-même importante.

On connaît aussi, par le document FR-A-2 379 204, un dispositif de synchronisation de multiplex dans un central de commutation temporelle. Dans ce dispositif, une mémoire à un élément binaire par mot a une capacité de deux trames, mais le contenu de la mémoire ne correspond pas obligatoirement à deux trames complètes. Dans ce document on impose, lors d'un saut ou d'un redoublement, la lecture de l'élément binaire de la mémoire d'adresse 256, ce qui impose une voie quelconque d'une trame mais pas nécessairement la première voie d'une trame. Le système réalisant la détection du mot de verrouillage de trame est situé en aval de la mémoire et il faut que les informations reçues par le système de détection concernent une voie et une seule, c'est-à-dire la voie qui contient le mot de verrouillage ; pour cela le système de détection bloque le compteur local pour provoquer un décalage d'un élément binaire des informations qu'il reçoit, jusqu'à ce que le code de verrouillage soit détecté.

On connaît également, par le document US-A-3 867 579, un dispositif de synchronisation pour un multiplex à 24 voies ayant un bit de verrouillage de trame et comportant deux mémoires ayant chacune une capacité d'une trame, l'une des mémoires étant en écriture lorsque l'autre est en lecture, et réciproquement. Un compteur distant délivre les adresses successives d'écriture qui sont appliquées à l'une ou l'autre des mémoires sous commande d'un signal délivré par une bascule commandée par le bit de verrouillage de trame. Un décodeur logique délivre des adresses de lecture à partir d'un signal d'horloge locale, ainsi qu'un signal de sélection de mémoire. Un dispositif de « glissement » délivre un signal pour la lecture alternée des mémoires, et lorsque ce signal est déphasé d'une certaine valeur par rapport au signal délivré par la bascule, il impose la relecture de la première des deux mémoires ; le déphasage est positif ou négatif selon que la fréquence de l'horloge distante est inférieure ou supérieure à celle de l'horloge locale. Après lecture des mémoires, le bit de verrouillage de trame est comparé à un bit généré localement ; si la comparaison est mauvaise le compteur distant est bloqué pendant le temps correspondant à un bit ; ce fonctionnement est répété jusqu'à ce que la comparaison soit bonne.

L'invention a pour but un dispositif de synchronisation plus simple que les dispositifs connus et permettant de mieux absorber la gigue.

L'invention a pour objet un dispositif de synchronisation de multiplex dans un central de commutation temporelle, le multiplex acheminant des signaux de parole modulés par impulsions codées dans des voies temporelles d'une trame, le dispositif comportant un compteur local, un compteur distant ayant une capacité de comptage égale à deux trames, un registre d'entrée, une mémoire de stockage ayant une capacité de deux trames, un registre de sortie relié à la sortie de la mémoire de stockage, un circuit d'adressage, un circuit de choix de temps d'écriture, un circuit de décision pour détecter un écart entre les valeurs délivrées par les compteurs local et distant inférieur à une valeur prédéterminée et imposer alors la relecture d'une trame dans la mémoire de stockage, et un circuit de verrouillage de trame pour détecter et contrôler le mot de verrouillage de trame du multiplex, caractérisé par le fait que le compteur local a une capacité de comptage égale au nombre des éléments binaires d'une trame, que le compteur distant est commandé par un signal d'horloge distante inversé lié au multiplex, que la mémoire de stockage est reliée en entrée à travers une porte ET d'écriture à la sortie d'un registre parallèle lui-même relié en entrée à la sortie du registre d'entrée, et en sortie au registre de sortie à travers une porte ET de lecture, que le circuit d'adressage pour écriture et lecture dans la mémoire de stockage est relié en entrée au compteur local qui délivre des adresses de lecture et au compteur distant qui délivre des adresses d'écriture, et en sortie à une entrée de commande d'adressage de la mémoire de stockage, que le circuit de choix du temps d'écriture est relié en entrée au compteur local et au compteur distant, et en sortie au circuit d'adressage et à la porte ET d'écriture, que le circuit de décision est relié en entrée au compteur local, au compteur distant et à la sortie du circuit de choix de temps d'écriture, et en sortie à une entrée du circuit d'adressage de la mémoire de stockage, et que le circuit de verrouillage de trame est relié en entrée au registre d'entrée et au compteur distant, et en sortie à une entrée d'une porte ET recevant par une liaison un signal permanent sur une autre entrée, la sortie de la porte ET étant reliée à l'entrée du compteur distant pour initialiser ledit compteur lorsque le mot de verrouillage de trame est détecté.

L'invention va être décrite ci-après à l'aide d'un exemple de réalisation illustré par les figures annexées dans lesquelles :

la figure 1   représente un schéma d'un dispositif de synchronisation conforme à l'invention,

la figure 2   représente en détail un détecteur du mot de verrouillage de trame du dispositif de la figure 1,

la figure 3   représente un circuit d'injection de l'imparité du dispositif de la figure 1,

la figure 4   représente un circuit de choix du temps d'écriture du dispositif de la figure 1,

la figure 5   représente un circuit de décision du dispositif de la figure 1.

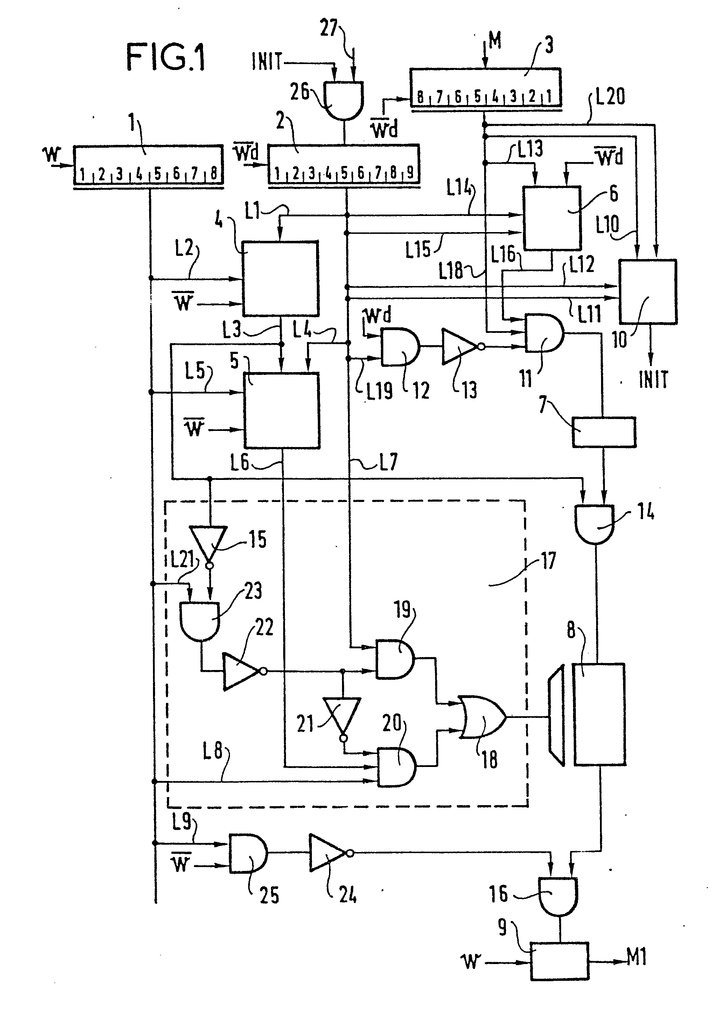

La figure 1 représente un dispositif de synchronisation de l'invention. Dans cette figure on trouve : un compteur local 1 qui avance au rythme d'un signal w délivré par une horloge locale (non représentée) ; un compteur distant 2 qui avance au rythme d'un signal $\bar{w}d$ délivré par un convertisseur de code (également non représenté) qui reçoit le multiplex à synchroniser, le signal $\bar{w}d$ correspondant à l'horloge distante ; un registre d'entrée 3, qui reçoit du convertisseur de code un multiplex M, et qui avance au rythme du signal $\bar{w}d$ ; un circuit de choix du temps d'écriture 4, un circuit de décision 5 qui autorise un saut ou un doublement de trame à la lecture de la mémoire, un circuit d'injection de l'imparité 6, un registre 7, de 4 e.b (éléments binaires), une mémoire 8 de 128 mots de 4 e.b, un circuit d'adressage 17, un registre de sortie 9, qui est un registre parallèle/série de 4 e.b, et un détecteur du mot de verrouillage de trame 10.

Le compteur local 1 est un compteur à 8 e.b. ; le compteur distant 2 est un compteur à 9 e.b. Le registre d'entrée 3 est un registre à 8 e.b. Les signaux w et $\bar{w}d$ sont des signaux ayant une durée de 245 nanosecondes et une période de 490 nanosecondes, le multiplex M ayant une trame de 125 microsecondes divisée en 32 voies temporelles de 8 e.b. chacune.

Le circuit de choix du temps d'écriture 4 reçoit le signal $\bar{w}$ et est relié en entrée, d'une part au compteur distant 2 par une liaison L1 qui correspond à l'e.b. 2 du compteur, et d'autre part au compteur local 1 par une liaison L2 qui correspond à l'e.b. 1 de ce compteur. Le circuit de choix du temps d'écriture délivre un signal sur une liaison L3.

Le circuit de décision 5 reçoit le signal $\bar{w}$, et est relié en entrée : à la sortie du circuit de choix du temps d'écriture 4, au compteur local 1 par une liaison L5 qui correspond aux e.b. 1 à 8 de ce compteur, et au compteur distant 2 par une liaison L4 qui correspond aux e.b. 5 à 9 de ce compteur. Le circuit de décision 5 délivre un signal sur une liaison L6.

Le circuit d'injection de l'imparité 6 reçoit le signal $\bar{w}d$, et est relié en entrée, d'une part au registre d'entrée 3 par une liaison L13 qui correspond à l'e.b. 3 dudit registre, et d'autre part au compteur distant 2 par des liaisons L14 et L15 qui correspondent respectivement aux e.b. 1 à 8 et à l'e.b. 9 dudit compteur. Le circuit d'injection d'imparité délivre un signal sur une liaison L16.

Le détecteur du mot de verrouillage de trame 10 est relié en entrée d'une part au registre d'entrée 3 par une liaison L10 qui correspond aux e.b. 3 à 8 du registre et par une liaison L20 qui correspond à l'e.b. 2 du registre, et d'autre part au compteur distant 2 par une liaison L11 qui correspond aux e.b. 1 à 8 du compteur et par une liaison L12 qui correspond à l'e.b. 9 du compteur. Le détecteur du mot de verrouillage de trame délivre en sortie un signal INIT qui sert à initialiser à la valeur 1 le compteur distant 2 par l'intermédiaire d'une porte ET26 qui reçoit sur une autre entrée un signal permanent par la liaison 27.

Le registre 7 est relié en entrée à la sortie d'une porte ET11. La porte ET11 est reliée en entrée au registre d'entrée 3 par une liaison L18 qui correspond aux e.b. 2, 4 et 5 du registre d'entrée, à la sortie du circuit d'injection de l'imparité 6 par la liaison L16, et à la sortie d'une porte ET12 à travers un inverseur 13. La porte ET12 est reliée en entrée au compteur distant 2 par la liaison L19 qui correspond aux e.b. 1 et 2 de ce compteur, et reçoit le signal wd. La sortie du registre 7 est reliée à une entrée d'une porte ET14 dont une autre entrée est reliée à la sortie du circuit de choix du temps d'écriture 4 (Liaison L3).

La porte ET11 reçoit, par la liaison L16, un e.b. du circuit d'injection de l'imparité, lequel laisse passer l'e.b. 3 du registre d'entrée ou élabore un e.b. de valeur 0 ou 1 pour rétablir l'imparité.

La mémoire 8 est reliée en entrée à la sortie de la porte ET14, et en sortie à une entrée d'une porte ET16. L'entrée de commande d'adressage de la mémoire 8 est reliée à la sortie du circuit d'adressage 17.

Le circuit d'adressage 17 comprend, en sortie une porte OU18 ayant une entrée reliée à la sortie d'une porte ET19 et une autre entrée reliée à la sortie d'une porte ET20 ; la porte ET19 a une entrée reliée au compteur distant 2 par une liaison L7 qui correspond aux e.b. 3 à 9 de ce compteur, et une autre entrée reliée d'une part à une entrée de la porte ET20 par un inverseur 21, et d'autre part à travers un inverseur 22 à la sortie d'une porte ET23. La porte ET23 a une entrée reliée à travers un inverseur 15, à la sortie du circuit de choix du temps d'écriture 4 et une autre entrée reliée au compteur local 1 par une liaison L21 qui correspond à l'e.b. 1 de ce compteur. La porte ET20 a une autre entrée reliée au compteur local 1 par une liaison L8 qui correspond aux e.b. 3 à 8 de ce compteur, et une autre entrée reliée à la sortie du circuit de décision 5 par la liaison L6. Cette liaison L6 délivre un e.b. de valeur 0 pour l'adressage de la première moitié de la mémoire 8, c'est-à-dire des mots 0 à 63, et de valeur 1 pour l'adressage de la seconde moitié de la mémoire 8, c'est-à-dire des mots 64 à 127.

Le registre de sortie 9 a son entrée parallèle reliée à la sortie de la porte ET16 dont une autre entrée est reliée, par un inverseur 24 à la sortie d'une porte ET25. Une entrée de la porte ET25 est reliée au compteur local 1 par une liaison L9 qui correspond aux e.b. 1 et 2 du compteur local ; une autre entrée reçoit le signal $\bar{w}$. L'avance du registre de sortie est commandée par le signal w. La sortie du registre de sortie est reliée à un multiplex M1 sur lequel on retrouve les informations du multiplex M entrant dans le registre d'entrée 3, après synchronisation par la base de temps locale.

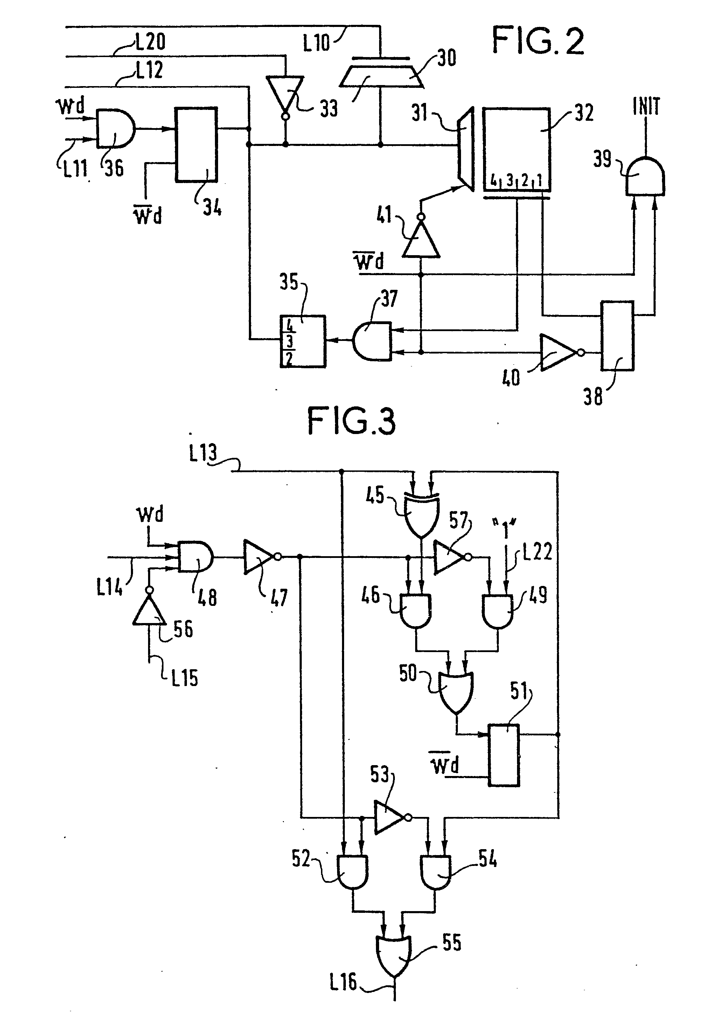

La figure 2 représente le détecteur du mot de verrouillage de trame 10 de la figure 1. Un décodeur d'adresse 30 est relié en entrée, par la liaison L10, aux e.b. 3 à 8 du registre d'entrée 3 ; sa sortie est reliée à un circuit d'adressage 31 d'une mémoire morte 32 de 128 mots de 4 e.b.. Le circuit d'adressage est également relié à la liaison L20 par un inverseur 33, la liaison L20 étant reliée à l'e.b. 2 du registre d'entrée, à la liaison L12 qui est reliée à l'e.b. 9 du compteur distant, à la sortie d'un registre unitaire 34, et à la sortie d'un registre 35 à 3 e.b.. Le registre unitaire 34 est commandé par le signal $\bar{w}$d, et est relié à la sortie d'une porte ET36 dont une entrée reçoit le signal wd et l'autre entrée est reliée, par la liaison L11 aux e.b. 1 à 8 du compteur distant. L'entrée du registre 35 est reliée à la sortie d'une porte ET37 dont une entrée est reliée aux e.b. 2, 3, 4 de poids fort en sortie de la mémoire morte 32, et une autre entrée reçoit le signal $\bar{w}$d. Un point mémoire 38 est commandé d'une part par le signal $\bar{w}$d à travers un inverseur 40, et d'autre part par l'e.b. 1 de poids faible en sortie de la mémoire morte 32 ; la sortie du point mémoire 38 est reliée à une entrée d'une porte ET39 dont une autre entrée reçoit le signal $\bar{w}$d ; la sortie de la porte ET39 délivre le signal d'initialisation INIT qui sert à initialiser le compteur distant 2. Le circuit d'adressage a une entrée commande d'adressage qui reçoit le signal $\bar{w}$d à travers un inverseur 41.

La mémoire morte 32 est divisée en 8 secteurs de 16 mots de 4 e.b. ; un premier secteur relatif à l'état verrouillé, un deuxième secteur relatif à l'état verrouillé avec perte d'un mot de verrouillage de trame, un troisième secteur relatif à l'état verrouillé avec perte de deux mots de verrouillage trame consécutifs, un quatrième secteur relatif à l'état perte de verrouillage, un cinquième secteur relatif à l'état reprise de verrouillage à confirmer, un sixième secteur relatif à l'état de reprise de verrouillage confirmé, un septième secteur relatif à l'état de reprise de verrouillage non confirmé, et un huitième secteur non utilisé. En sortie de la mémoire morte 32 l'élément binaire 1 est utilisé pour l'initialisation du compteur distant 2 et les éléments binaires 2, 3, 4 sont inscrits dans le registre 35 et utilisés pour l'adressage de la mémoire. Au départ, en supposant que l'on est dans l'état perte de verrouillage, le quatrième secteur est adressé par la sortie du registre 35 dont les e.b. repérés 2, 3, 4 ont les valeurs 0, 0,1. Ce quatrième secteur est adressé jusqu'à ce que le décodeur 30 et l'inverseur 33 délivrent un signal de valeur 1 ce qui correspond à un mot de verrouillage trame reconnu ; l'e.b. 1 en sortie de la mémoire morte prend la valeur 1 et le compteur distant 2 est initialisé, les e.b. 2, 3, 4 en sortie de la mémoire morte prennent les valeurs 1, 0, 1 et le cinquième secteur est adressé. Lors de la trame suivante, la liaison 12 délivre un signal de valeur 1, et si l'e.b. 2 du registre d'entrée 3 à la valeur 1 (liaison 20), les e.b. 2, 3, 4 en sortie de la mémoire morte prennent les valeurs 1, 1, 1 et le sixième secteur est adressé ; dans le cas contraire c'est le septième secteur qui est adressé.

Lorsque le sixième secteur est adressé et que l'on est en trame paire (signal de valeur 0 sur la liaison 12), si on est en présence du mot de verrouillage trame (sortie du décodeur 30 égale à 1 et sortie de l'inverseur 33 égale à 1) les e.b. 2, 3, 4 en sortie de la mémoire morte prennent les valeurs 0, 0, 0, et le premier secteur qui correspond à l'état verrouillé est adressé ; tant qu'une perte de verrouillage n'est pas détectée, les e.b. 2, 3, 4 en sortie de la mémoire morte prennent les valeurs 0, 0, 0 de sorte que le premier secteur reste adressé.

Si lorsque le sixième secteur est adressé et que pendant une trame paire le mot de verrouillage n'est pas reconnu, les e.b. 2, 3, 4 en sortie de la mémoire morte prennent les valeurs 0, 0, 1 et c'est le quatrième secteur qui est adressé afin de reprendre la recherche du mot de verrouillage trame. Lorsque le septième secteur était adressé, au lieu du sixième secteur, ce septième secteur reste adressé pendant une trame, puis dès que la trame paire se présente, les e.b. 2, 3, 4 en sortie de la mémoire morte prennent les valeurs 0, 0, 1 ce qui adresse le quatrième secteur pour la recherche du mot de verrouillage trame.

Lorsque le premier secteur relatif à l'état verrouillé est adressé, et que l'on ne détecte pas le mot de verrouillage dans une trame paire, les e.b. 2, 3, 4 en sortie de la mémoire morte prennent les valeurs 1, 0, 0 et c'est le deuxième secteur qui est adressé. Lorsque l'on est ensuite dans une trame paire et que l'on détecte le mot de verrouillage trame, les e.b. 2, 3, 4 en sortie de la mémoire morte prennent les valeurs 0, 0, 0 et c'est le premier secteur qui est adressé ; mais si le mot de verrouillage trame n'est pas détecté dans la trame paire, les e.b. 2, 3, 4 en sortie de la mémoire morte prennent les valeurs 0, 1, 0 et c'est le troisième secteur qui est adressé. Lorsque l'on est ensuite dans une trame paire et que l'on détecte le mot de verrouillage trame, les e.b. 2, 3, 4 en sortie de la mémoire morte prennent les valeurs 0, 0, 0 et c'est le premier secteur qui est adressé ; mais si l'on ne détecte par le mot de verrouillage dans la trame paire les e.b. 2, 3, 4 en sortie de la mémoire prennent les valeurs 0, 0, 1 et c'est le quatrième secteur qui est adressé, pour la recherche du mot de verrouillage trame.

On voit que l'adressage d'un secteur est donné par les valeurs des e.b. 2, 3, 4 en sortie de la mémoire morte et que le changement de secteur ne se fait que si certaines conditions sont remplies ; si cela n'est pas le cas, c'est toujours le même secteur qui est adressé, mais pas nécessairement le même mot ; pour que l'adressage du secteur se fasse correctement il faut donc que les e.b. du mot adressé, dans le secteur, aient certaines valeurs ; ainsi pour le quatrième secteur, l'e.b. 1 à la valeur 0 et les e.b. 2, 3, 4 ont les valeurs 0, 0, 1 tant que l'on ne détecte le mot de verrouillage trame. Si on détecte le mot de verrouillage, la sortie du décodeur 30 prend la valeur 1, et si l'e.b. 2 du registre 3 à la valeur 0, la sortie de l'inverseur 33 prend la valeur 1, ce qui précise une adresse de mot dans le quatrième secteur, et les e.b. 1, 2, 3, 4 de ce mot de la mémoire morte ont pour valeur 1, 1, 0, 1, ce qui entraîne l'initialisation du compteur distant 2 et le changement de secteur puisque les valeurs 1, 0, 1 des e.b. 2, 3, 4 correspondent à un adressage du cinquième secteur. Les mots des autres secteurs de la mémoire morte permettent eux aussi l'adressage du même secteur tant que le mot contenant l'adresse d'un nouveau secteur n'est pas adressé, c'est-à-dire tant que les conditions du changement ne sont pas réunies, notamment tant que le signal en sortie du registre unitaire 34 a une valeur égale à zéro, sauf lors du passage du quatrième au cinquième secteur.

La figure 3 représente le circuit d'injection de l'imparité 6 de la figure 1. Il comporte une porte OU exclusif 45 dont une entrée est reliée par la liaison L13, à l'e.b. 3 du registre d'entrée et une autre entrée est reliée à la sortie d'un registre unitaire 51. La sortie de la porte OU exclusif 45 est reliée à une entrée d'une porte ET46 dont une autre entrée est reliée, à travers un inverseur 47, à la sortie d'une porte ET48. Une entrée de la porte ET48 reçoit le signal wd, une autre entrée est reliée, par la liaison L14, aux e.b. 1 à 8 du compteur distant, et une autre entrée est reliée, à travers un inverseur 56, par la liaison L15, à l'e.b. 9 du compteur distant. La sortie de la porte ET46 est reliée à une entrée d'une porte OU50 dont une autre entrée est reliée à la sortie d'une porte ET49. Une entrée de la porte ET49 est reliée, par un inverseur 57, à la sortie de l'inverseur 47, et une autre entrée reçoit sur une liaison L22 un signal permanent de valeur « 1 ».

La sortie de la porte OU50 est reliée à l'entrée du registre unitaire 51 qui est commandé par le signal w̄d. La sortie du registre unitaire 51 est reliée à une entrée d'une porte ET54 dont une autre entrée est reliée, à travers un inverseur 53, à la sortie de l'inverseur 47 ; la sortie de la porte ET54 est reliée à une entrée d'une porte OU55 dont une autre entrée est reliée à la sortie d'une porte ET52.

Une entrée de la porte ET52 est reliée à la liaison L13, et reçoit donc l'e.b. 3 du compteur distant, et une autre entrée est reliée à la sortie de l'inverseur 47. La sortie de la porte OU55 est reliée à la liaison L16.

Tant que la sortie de la porte ET48 a la valeur 0, et la sortie de l'inverseur 47 a la valeur 1, la liaison L13 étant reliée à l'e.b. 3 du registre d'entrée 3 et la porte ET52 recevant un 1 de l'inverseur 47, la valeur de l'e.b. 3 du registre d'entrée est transmise, via la porte ET52, la porte OU55 et la liaison L16, à la porte ET11 (figure 1). D'autre part la porte ET46 reçoit le signal « 1 » de l'inverseur 47 ; dès que l'e.b. 3 du registre d'entrée a la valeur 1, la porte OU exclusif 45 transmet une valeur zéro à la porte ET46, puis, via la porte OU50, au registre unitaire 51 lorsque la sortie de ce dernier a une valeur 1, valeur imposée au début de la séquence par la porte ET49 via la porte OU50 ; cette valeur « 0 » est donc appliquée à l'entrée de la porte OU exclusif 45 lors du passage à la valeur 1 du signal w̄d.

Lorsque l'e.b. 3, liaison L13, a la valeur 1, la porte OU exclusif 45 délivre un « 1 » et le registre unitaire 51 prend la valeur « 1 » ; dès que l'e.b. 3 prend de nouveau la valeur « 0 » ; le même fonctionnement aura lieu selon les valeurs que prendra l'e.b. 3 du registre d'entrée. Lorsque le compteur distant 2 a compté 256 e.b., la sortie de la porte ET48 passe à la valeur « 1 », au signal wd, ce qui bloque les portes ET46 et 52 et débloque les portes ET49 et 54 ; le registre unitaire 51 étant dans un certain état, et sa sortie ayant l'une des valeurs 0 ou 1, cette valeur est transmise par la porte ET54, la porte OU55 et la liaison L16, à la porte ET11 (figure 1). De cette manière l'e.b. 3 du registre d'entrée 3 est transmis à la mémoire 8 (figure 1) sauf en début d'une trame impaire où c'est la valeur de sortie du registre unitaire 51 qui est transmise. L'e.b. 3 du registre d'entrée 3 correspond au deuxième e.b. de la première voie d'une trame impaire ; le circuit d'injection de l'imparité détermine donc la valeur que doit prendre ce deuxième e.b. de la première voie de la trame impaire afin que cet e.b. et les 511 e.b. qui le précèdent forment un ensemble comprenant un nombre impair d'e.b. à l'état 1.

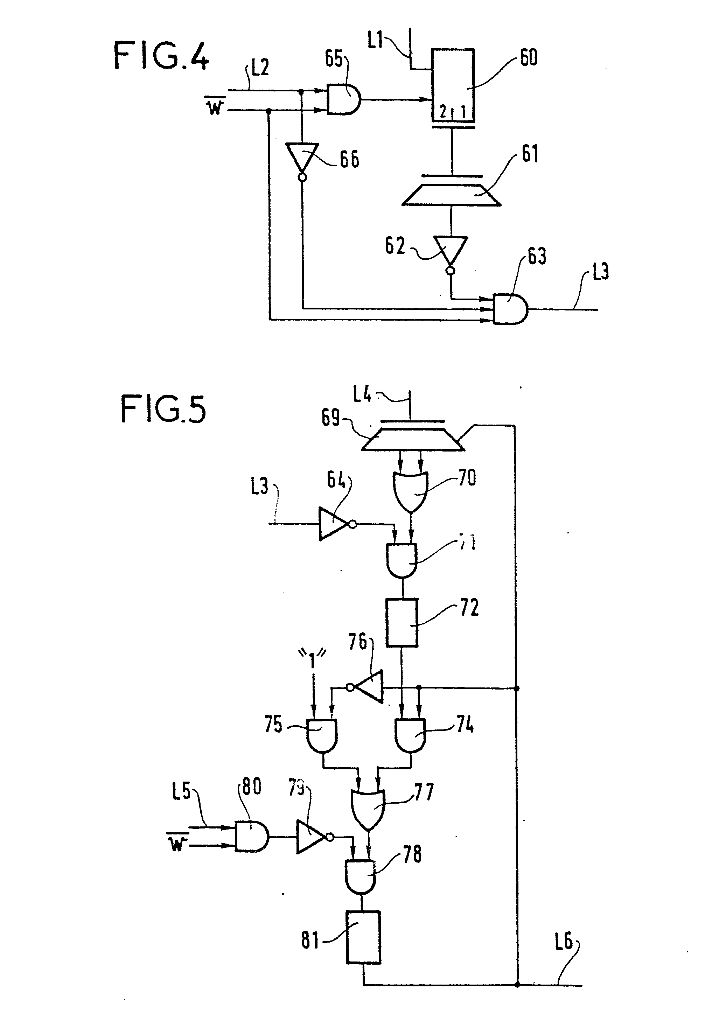

La figure 4 représente le circuit de choix du temps d'écriture 4 de la figure 1 : un registre série-parallèle 60, à deux e.b., est relié en entrée par la liaison L1, à l'e.b. 2 du compteur distant ; sa sortie est reliée à l'entrée d'un décodeur 61 dont la sortie est reliée par un inverseur 62 à une entrée d'une porte ET63. La sortie de la porte ET63 est reliée à la liaison L3. La porte ET63 a également une entrée reliée à la liaison L2 à travers un inverseur 66, et reçoit le signal w̄ surune autre entrée. Le registre série-parallèle 60 a son entrée de commande reliée à la sortie d'une porte ET65 dont une entrée reçoit le signal w̄ et une autre entrée est reliée, par la liaison L2, à l'e.b. 1 du compteur local.

Le signal délivré par l'e.b. 1 du compteur local est le sous-multiple d'ordre 1 du signal w, que l'on désignera par $\Omega1$. La porte ET65 délivre donc un signal de commande w̄ · $\Omega1$ au registre série-parallèle 60 qui reçoit en entrée un signal $\Omega d(2)$ qui est le sous-multiple d'ordre 2 du signal distant w̄d. Le décodeur 61 ne délivre un signal de sortie que lorsque le décodage des sorties du registre série-parallèle est différent de deux. La porte ET63 reçoit les signaux w̄ et $\overline{\Omega1}$, et délivre un signal de sortie lorsque ces signaux ont la valeur 1 et lorsque le signal délivré par le décodeur 61 est égal à 0.

Le registre série-parallèle 60 est commandé par le signal w̄ · $\Omega1$, qui est décalé d'une demi période du signal $\Omega1$ par rapport au signal w̄ · $\overline{\Omega1}$ appliqué à la porte ET63. Les changements du signal de sortie du décodeur, qui sont liés au signal $\Omega d(2)$, interviennent donc soit avant, soit après le signal w̄ · $\Omega1$ appliqué à la porte ET63 dont le signal de sortie, sur la liaison L3, sert à commander l'écriture dans la mémoire 8. Il y a deux temps possibles d'écriture par signal $\Omega d(2)$, les horloges locales et distantes ayant des périodes très proches l'une de l'autre ; si le signal d(2) est décalé par rapport au signal $\Omega2$ sous multiple d'ordre 2 du signal w (cas d'une horloge distante plus rapide ou plus lente que l'horloge locale), à un moment donné des transitions du signal $\Omega d(2)$ se produisent lors d'un temps d'écriture possible ; le décodeur 61 ne délivrant de signal que si le décodage des sorties du registre série-parallèle 60 sont différentes de deux, le temps d'écriture correspondant à une transition du signal $\Omega d(2)$ de la valeur 1 à la valeur 0 est supprimé ; cette transition correspond en effet à une écriture dans le registre 7 (figure 1), et les échantillons présentés à l'entrée de la mémoire 8 seraient instables si l'écriture avait lieu à ce moment là.

La figure 5 représente le circuit de décision 5 de la figure 1. Un décodeur 69 est relié en entrée, par la liaison L4, aux e.b. 5 à 9 du compteur distant 2. Le décodeur décode deux adresses, 0, et 31 ; l'adresse 0 est présente en sortie du décodeur pendant 16 e.b., soit deux voies temporelles de 8 e.b. chacune, c'est-à-dire pendant la lecture des mots 0, 1, 2, 3 de la mémoire 8 (figure 1) ; l'adresse 31 est présente en sortie du décodeur pendant 16 e.b., c'est-à-dire pendant la lecture des mots 124, 125, 126, 127 de la mémoire 8. Les sorties du décodeur (adresses 0 et 31) sont reliées à une entrée d'une porte OU70 dont la sortie est reliée à une entrée d'une porte ET71 ; une autre entrée de la porte ET71 est reliée à la sortie du circuit de choix du temps d'écriture 4 par la liaison L3, à travers un inverseur 64. La sortie de la porte ET71 est reliée d'un registre unitaire 72. La sortie du registre 72 est reliée à une entrée d'une porte ET74. Une autre porte ET75 reçoit en permanence sur une entrée un signal de valeur 1 ; une autre entrée de la porte ET75 est reliée, à travers un inverseur 76, à une autre entrée de la porte ET74. Chaque porte ET74 et 75 est reliée, en sortie à une entrée d'une porte OU77, respectivement. La sortie de la porte OU77 est reliée à une entrée d'une porte ET78 dont une autre entrée est reliée, à travers un inverseur 79, à la sortie d'une porte ET80. La porte ET80 reçoit le signal w̄ sur une entrée, l'autre entrée étant reliée, par la liaison L5, aux e.b. 1 à 8 du compteur local 1. La sortie de la porte ET78 est reliée à un registre unitaire 81 dont la sortie est reliée d'une part à une entrée de commande du décodeur 70 et à l'inverseur 76, et d'autre part, par la liaison L6 à la porte ET20 de la figure 1. Le signal sortant du registre unitaire 81 est utilisé, dans l'adressage de la mémoire 8 par la porte ET20, comme un signal de poids fort 9 par rapport aux signaux provenant des e.b. 3 à 8 du compteur local et appliqué à ladite porte ET20 ; ce signal de poids fort 9 permet d'adresser la première ou la seconde moitié de la mémoire qui correspondent à une trame complète. Lorsque les e.b. 1 à 8 (liaison L5) du compteur local 1 ont la valeur 1 dans le créneau « 1 » du signal w̄, le signal en sortie de la porte ET80 a la valeur 1 ; lorsque ce signal de sortie passe de la valeur 1 à la valeur 0 la porte ET78 est activée sur cette transition 1-0 ; la porte ET75 étant passante, en supposant que la sortie du registre unitaire 81 était 0, la valeur 1 est inscrite dans le registre unitaire 81. Le signal sortant du registre unitaire 81 active le décodeur 69, la porte ET74 et bloque la porte ET75, et commande par la liaison L6 la lecture de la seconde moitié de la mémoire 8.

Les adresses 0 et 31 délivrées par le décodeur 69 ne sont présentes chacune que pendant le temps de comptage de 16 e.b. En fin d'écriture de la mémoire 8 (figure 1) l'adresse 31 est d'abord décodée et elle est suivie de l'adresse 0 ; au total le signal de sortie de la porte OU70 est présent pendant le comptage de 32 e.b. uniquement, et ce signal est inscrit dans le registre 72 lorsque le signal sur la liaison L3 passe de la valeur 1 à la valeur 0. Lorsque le compteur local 1 termine le comptage des mots de la mémoire 8, les e.b. 1 à 8 de ce compteur ont la valeur 1 et la porte ET78 est de nouveau activée lors de la transition 1-0 du signal de sortie de la porte ET80. Deux cas peuvent alors se présenter ; dans le premier cas le décodeur 69 ne délivre pas d'adresse 0 ou 31 ; le registre 72 délivre donc un signal 0 qui est appliqué à l'entrée de la porte ET78 ; lors de l'activation de la porte 78 le registre unitaire 81 est remis à zéro ce qui permet l'adressage de la première moitié de la mémoire 8, la liaison L6 acheminant un signal 0 ; dans le second cas le décodeur délivre une adresse, 0 ou 31, lorsque la porte ET78 est activée ; cette porte ET78 reçoit donc un signal 1 du registre 72 et le registre unitaire 81 reste à la valeur 1 ; la liaison L6 achemine un signal 1 qui commande la lecture de la seconde moitié de la mémoire 8, ce qui correspond soit à un saut d'une trame soit à un doublement d'une trame selon que l'horloge locale est moins rapide, ou plus rapide que l'horloge distante.

On va décrire à présent, en supposant que l'on a détecté le mot de verrouillage de trame, le fonctionnement du dispositif de synchronisation représenté figure 1. Les informations du multiplex M entrant dans le registre d'entrée 3 au rythme du signal w̄d sont transférées dans le registre 7 au rythme du signal Ωd(2) délivré par le compteur distant 2. Les informations du registre 7 sont transférées dans la mémoire 8 sous commande du signal délivré par le circuit de choix du temps d'écriture 4. La mémoire 8 est adressée en écriture par le compteur distant, la porte ET19 recevant les adresses par la liaison L7 (e.b. 3 à 9) des mots de 4 e.b. de la mémoire. Cet adressage a lieu lorsque le signal en sortie de la porte ET23 a la valeur 0, c'est-à-dire lorsque le circuit de choix du temps d'écriture délivre un signal et pendant les demi périodes du signal 1 où celui-ci a la valeur 0. L'inverseur 21 interdit l'adressage en lecture lors des instants d'adressage en écriture de la mémoire 8. La porte ET20 permet l'adressage en lecture, par le compteur local dont elle reçoit les e.b. 3 à 8 par la liaison L8 ; la porte ET20 reçoit également du circuit de décision 5 un signal qui est un signal de poids fort, c'est-à-dire qu'il permet, avec les e.b. 3 à 8 du compteur local d'adresser la totalité de la mémoire 8. Comme indiqué lors de la description du circuit de décision, le signal qu'il délivre permet la lecture normale de la mémoire et impose, lorsque le décalage entre les horloges distante et locale est inférieur ou égal à 2 voies temporelles, la lecture des mots 64 à 127 dès que le dernier mot de la mémoire a été lu. Ceci se traduit soit un saut d'une trame si l'horloge distante est plus rapide que l'horloge locale, soit un doublement d'une trame si l'horloge distante est plus lente que l'horloge locale. Les informations lues dans la mémoire 8 sont chargées en parallèle dans le registre de sortie 9 au rythme du signal Ω2 lors des transitions de la valeur 1 à la valeur 0 de ce signal ; les informations sont émises en série sur le multiplex M1.

**Revendications**

1. Dispositif de synchronisation de multiplex dans un central de commutation temporelle, le multiplex acheminant des signaux de parole modulés par impulsions codées dans des voies temporelles d'une trame, le dispositif comportant un compteur local (1), un compteur distant (2) ayant une capacité de comptage égale à deux trames, un registre d'entrée (3), une mémoire de stockage (8) ayant une capacité de deux trames, un registre de sortie (9) relié à la sortie de la mémoire de stockage, un circuit d'adressage (17), un circuit de choix de temps d'écriture (4), un circuit de décision (5) pour détecter un écart entre les valeurs délivrées par les compteurs local et distant inférieur à une valeur prédéterminée et imposer alors la relecture d'une trame dans la mémoire de stockage, et un circuit de verrouillage de trame (10) pour détecter et contrôler le mot de verrouillage de trame du multiplex, caractérisé par le fait que le compteur local (1) a une capacité de comptage égale au nombre des éléments binaires d'une trame, que le compteur distant (2) est commandé par un signal d'horloge distante inversé lié au multiplex, que la mémoire de stockage (8) est reliée en entrée à travers une porte ET d'écriture (14) à la sortie d'un registre parallèle (7) lui-même relié en entrée à la sortie du registre d'entrée (3), et en sortie au registre de sortie (9) à travers une porte ET de lecture (16), que le circuit d'adressage (17) pour écriture et lecture dans la mémoire de stockage (8) est relié en entrée au compteur local (1) qui délivre des adresses de lecture et au compteur distant (2) qui délivre des adresses d'écriture, et en sortie à une entrée de commande d'adressage de la mémoire de stockage, que le circuit de choix du temps d'écriture (4) est relié en entrée au compteur local (1) et au compteur distant (2), et en sortie au circuit d'adressage (17) et à la porte ET d'écriture (14), que le circuit de décision (5) est relié en entrée au compteur local (1), au compteur distant (2) et à la sortie du circuit de choix de temps d'écriture (4), et en sortie à une entrée du circuit d'adressage de la mémoire de stockage, et que le circuit de verrouillage de trame (10) est relié en entrée au registre d'entrée (3) et au compteur distant (2), et en sortie à une entrée (INIT) d'une porte ET (26) recevant par une liaison (27) un signal permanent sur une autre entrée, la sortie de la porte ET (26) étant reliée à l'entrée du compteur distant (2) pour initialiser ledit compteur lorsque le mot de verrouillage de trame est détecté.

2. Dispositif de synchronisation selon la revendication 1, caractérisé par le fait que la mémoire est une mémoire de cent vingt huit mots de quatre e.b. chacun, que le registre parallèle (7) et le registre de sortie (9) ont chacun une capacité de quatre e.b., que les e.b. du registre d'entrée (3) sont transférés en parallèle par groupes de quatre dans le registre parallèle, que le circuit de choix du temps d'écriture (4) délivre au moins un signal entre deux transferts de quatre e.b. du registre d'entrée (3) dans le registre parallèle (7) et que le circuit d'adressage (17) délivre une adresse d'écriture et une adresse de lecture entre deux desdits transferts.

3. Dispositif de synchronisation selon la revendication 1, caractérisé par le fait que le circuit de choix du temps d'écriture (4) comprend : un registre série-parallèle (60) d'une capacité de deux e.b., recevant du compteur distant (2) le sous-multiple d'ordre deux du signal d'horloge distante, et commandé par le signal d'horloge locale inversé et le sous-multiple d'ordre 1 du signal d'horloge locale délivré par le compteur local (1), un décodeur (61) délivrant un signal lorsque le décodage des sorties dudit registre série parallèle (60) est différent de deux, et une porte ET (63) délivrant un signal lorsque le signal d'horloge locale inversé, le sous-multiple d'ordre 1 inversé du compteur local et le signal de sortie inversé du décodeur (61) ont la valeur 1, ledit signal délivré par la porte ET (63) constituant le signal de sortie du circuit de choix du temps d'écriture (4).

4. Dispositif de synchronisation selon la revendication 1, caractérisé par le fait que le circuit de décision (5) comprend un décodeur (69), relié à la sortie du compteur distant (2), et un registre unitaire (72), le décodeur délivrant un signal pendant les deux dernières voies temporelles mémorisées dans la mémoire (8) et les deux premières voies temporelles mémorisées, que le registre unitaire (72) reçoit un signal de valeur 1 lorsque le compteur local (1) a compté les e.b. d'une première trame dans la mémoire (8), et que le registre unitaire (72) reçoit le signal de sortie du décodeur (69) lorsque le compteur local a compté les e.b. d'une deuxième trame dans la mémoire, ledit registre unitaire (72) délivrant un signal qui autorise l'adressage de la première trame dans la mémoire s'il a la valeur 0, et l'adressage de la seconde trame dans la mémoire s'il a la valeur 1.

5. Dispositif de synchronisation selon la revendication 1, caractérisé par le fait que le circuit de verrouillage de trame (10) comprend un décodeur d'adresse (30) relié à la sortie du registre d'entrée (3), une mémoire morte (32) comportant huit secteurs de seize mots de quatre e.b. chacun dont sept secteurs sont utilisés, les trois e.b. de poids forts étant relié à un registre (35) dont la sortie est reliée à un circuit d'adressage (31) de la mémoire (32), l'e.b. de poids faible étant relié à un registre unitaire (38) pour initialiser le compteur distant (2), le circuit d'adressage (31) étant également relié au décodeur (30), à un e.b. du registre d'entrée (3) et au compteur distant (2) dont il reçoit un premier signal lorsque le compteur compte une trame impaire, et un second signal lorsque ledit compteur termine le comptage d'une trame les e.b. de poids fort déterminant une adresse d'un secteur et les autres liaisons du circuit d'adressage (31) déterminant un mot dans un secteur, les sept secteurs utilisés correspondant des états différents de la détection du verrouillage de trame.

6. Dispositif de synchronisation selon la revendication 1, caractérisé par le fait que le circuit d'injection de l'imparité (6) est relié à un e. b. du registre d'entrée (3) et reçoit du compteur distant (2) un signal lorsque ledit compteur passe d'une trame paire à une trame impaire, que la valeur de l'e. b. du registre d'entrée (3) est transmis à la mémoire (8) du dispositif de synchronisation par l'intermédiaire d'une première porte ET (52) et d'une porte OU (55), ladite première porte ET (52) étant validée en permanence sauf lors du passage d'une trame paire à une trame impaire, qu'un registre unitaire (51) a sa sortie reliée à une entrée d'une porte OU exclusif (45) dont l'autre entrée est reliée à l'e. b. du registre d'entrée, le registre unitaire (51) recevant le signal de sortie de la porte OU exclusif (45) sauf lors du passage d'une trame paire à une trame impaire ou il reçoit un signal de valeur 1, la valeur du registre unitaire (51) avant ledit passage étant appliquée à ladite porte OU (55) par une deuxième porte ET (54) validée au moment du passage et se substituant à la valeur de l'e. b. reçu par ladite première porte ET (52) ladite valeur du registre unitaire (51) appliquée à la deuxième porte ET (54) étant telle qu'elle constitue avec les 511 valeurs précédentes de l'e. b. du registre d'entrée transmise par la première porte ET (52) un ensemble comprenant un nombre impair d'e. b. à l'état 1.

### Claims

1. A device for synchronizing multiplex lines in a time division exchange, the multiplex lines conveying PCM speech signals arranged in time slots grouped into frames, the device comprising a local counter (1), a distant counter (2) with a counting capacity equal to two frames, an input register (3), a storage memory (8) with a capacity of two frames, an output register (9) connected to the output of the storage memory, an addressing circuit (17), a write time select circuit (4), a decision circuit (5) for detecting a difference between the values furnished by the local and the distant counters less than a predetermined value and for imposing a new readout of a frame from the storage memory, and a frame alignment circuit (10) for detecting and checking the frame alignment word of the multiplex, characterized in that the local counter (1) has a counting capacity equal to the number of bits in a frame, that the distant counter (2) is controlled by an inverted distant clock signal connected to the multiplex, that the input of the storage memory (8) is connected via a write AND gate (14) to the output of a parallel register (7), the input of which is connected to the output of the input register (3), whereas the output of the storage memory is connected to the output register (9) via a read AND gate (16), that the addressing circuit (17) for the write-in and the readout operations of the storage memory (8) is connected by its inputs to the local counter (1) which furnishes readout addresses, and to the distant counter (2) which furnishes write-in addresses, and by its output to an address control input of the storage memory, that the write time select circuit (4) is connected by its inputs to the local counter (1) and to the distant counter (2) and by its output to the addressing circuit (17) and to the write AND gate (14), that the decision circuit (5) is connected by its inputs to the local counter (1), to the distant counter (2) and to the output of the write time select circuit (4) and by its output to an input of the addressing circuit of the storage memory, and that the frame alignment circuit (10) is connected by its inputs to the input register (3) and to the distant counter (2) and by its output to an input (INIT) of an AND gate (26) which receives by a connection (27) a permanent signal on its other input, the output of this AND gate (26) being connected to the input of the distant counter (2) for resetting this counter as soon as the frame alignment word has been detected.

2. A device for synchronizing multiplex lines according to claim 1, characterized in that the memory has a capacity of 128 words of four bits each, that the parallel register (7) and the output register (9) are each provided with a capacity of four bits, that the bits coming from the input register (3) are transferred parallelly by groups of four bits to the parallel register, that the write time select circuit (4) furnishes at least one signal between two transfer operations of four bits from the input register (3) to the parallel register (7) and that the addressing circuit (17) delivers a write address and a read address between two said transfer operations.

3. A synchronizing device according to claim 1, characterized in that the write time select circuit (4) comprises : a series-parallel register (60) having a capacity of two bits and receiving from the distant counter (2) the submultiple of the second order of the distant clock signal, and controlled by the inverted local clock signal, and receives the submultiple of the first order of the local clock signal furnished by the local counter (1), a decoder (61) furnishing a signal when the decoding of the output of said series-parallel register (60) differs from two, and an AND gate (63) furnishing a signal when the inverted local clock signal, the inverted submultiple of the first order of the local counter and the inverted output signal of the decoder (61) have the value one, this signal which is delivered by the AND gate (63) constituting the output signal of the write time select circuit (4).

4. A synchronizing device according to claim 1, characterized in that the decision circuit (5) comprises a decoder (69) connected to the output of the distant counter (2) and a unitary register (72), the decoder furnishing a signal during the last two time slots stored in the memory (8) and the first two stored time slots, that the unitary register (72) receives a signal of the value one when the local counter (1) has counted the bits of a first frame in the memory (8), and that the unitary register (72) receives the output signal of the decoder (69) when the local counter has counted the bits of a second frame in the memory, this unitary register (72) delivering a signal which authorizes the addressing of the first frame in the memory, if its value is zero, and the addressing of the second frame in the memory, if its value is one.

5. A synchronizing device according to claim 1, characterized in that the frame alignment circuit (10) comprises : an address decoder (30) connected to the output of the input register (3), a read only memory (32) having eight sectors of sixteen four bit words each, seven sectors being used, the three most significant bits being connected to a register (35) having an output connected to an addressing circuit (31) of the memory (32), whereas the least significant bit is connected to a unitary register (38) for resetting the distant counter (2), the addressing circuit (31) being also connected to a decoder (30), to a bit of the input register (3) and to the distant counter (2) from which it receives a first signal when the counter counts an odd numbered frame, and a second signal when this counter has terminated the counting of a frame, the most significant bits determining the address of a sector and the remaining links of the addressing circuit (31) determining a word in the sector, the seven sectors used corresponding to different states of detection of frame alignment.

6. A synchronizing device according to claim 1, characterized in that the odd parity injection circuit (6) is connected to one bit of the input register (3) and receives from the distant counter (2) a signal when this counter transits from an even numbered frame to an odd numbered frame, that the value of the bit of the input register (3) is transmitted to the memory (8) of the synchronizing device via a first AND gate (52) and an OR gate (55), said first AND gate (52) being enabled permanently except during the transition from an even numbered frame to an odd numbered frame, that a unitary register (51) is connected by its output to an input of an exclusive OR gate (45), the other input of which is connected to the input register, the unitary register (51) receiving the output signal of the exclusive OR gate (45) except during the transistion from an even numbered frame to an odd numbered frame in which it receives a signal of the value one, the value of the unitary register (51) prior to said transition being applied to said OR gate (55) via a second AND gate (54) which is enabled at the transition instant and replaces the value of the bit received from the first AND gate (52), said value of the unitary register (51) which is applied to the second AND gate (54) being chosen such that it constitutes together with the 511 values of the input register transmitted earlier, a group in which the number of bits of the state one is odd.

**Ansprüche**

1. Vorrichtung zur Multiplexsynchronisierung in einer Zeitschalt-Vermittlungsanlage, wobei das Multiplex PCM-Sprachsignale in Zeitkanälen eines Zeitrahmens enthält und die Vorrichtung einen örtlichen Zähler (1), einen entfernten Zähler (2) mit einer zwei Zeitrahmen entsprechenden Zählkapazität, ein Eingangsregister (3), einen Speicher (8) mit einem Fassungsvermögen von zwei Zeitrahmen, ein an den Ausgang des Speichers angeschlossenes Ausgangsregister (9), einen Adressierschaltkreis (17), einen Schaltkreis (4) zur Auswahl des Schreibzeitpunkts, einen Entscheidungsschaltkreis (5) zur Feststellung einer Abweichung zwischen den von örtlichen und vom entfernten Zähler gelieferten Werten um einen Betrag, der unter einem vorgegebenen Wert liegt, worauf ein im Speicher enthaltener Rahmen nochmals gelesen wird, und einen Rahmenverriegelungsschaltkreis (10) enthält, der das Rahmenverriegelungswort des Multiplex erkennt und kontrolliert, dadurch gekennzeichnet, daß der örtliche Zähler (1) eine Zählkapazität gleich der Anzahl der Binärelemente in einem Zeitrahmen besitzt, daß der entfernte Zähler (2) von einem invertierten entfernten Taktsignal, das mit dem Multiplex verknüpft ist, gesteuert wird, daß der Speicher (8) eingangsseitig über ein Schreib-UND-Tor (14) an den Ausgang eines selbst eingangsseitig mit dem Ausgang des Eingangsregisters (3) verbundenen Parallelregisters (7) und ausgangsseitig über ein Lese-UND-Tor (16) an das Ausgangsregister (9) angeschlossen ist, daß der Adressierschaltkreis (17) für das Auslesen aus dem und das Einschreiben in den Speicher (8) eingangsseitig mit dem örtlichen Zähler (1), der die Leseadressen liefert, und mit dem entfernten Zähler (2), der die Schreibadressen liefert, sowie ausgangsseitig mit dem Adressensteuereingang des Speichers verbunden ist, daß der Schaltkreis (4) zur Auswahl des Schreibzeitpunkts eingangsseitig an den örtlichen und den entfernten Zähler (1, 2) und ausgangsseitig an den Adressierschaltkreis (17) und an das Schreib-UND-Tor (14) angeschlossen ist, daß der Entscheidungsschaltkreis (5) eingangsseitig mit dem örtlichen Zähler (1), dem entfernten Zähler (2) und mit dem Ausgang des Schaltkreises (4) zur Auswahl des Schreibzeitpunkts und ausgangsseitig mit dem Eingang des Speicheradressierschaltkreises verbunden ist, und daß der Rahmenverriegelungsschaltkreis (10) eingangsseitig an das Eingangsregister (3) und den entfernten Zähler (2) und ausgangsseitig an einen Eingang (INIT) eines UND-Tores (26) angeschlossen ist, das über eine Leitung (27) und einen anderen Eingang ein Dauersignal zugeführt erhält, wobei der Ausgang dieses UND-Tors (26) an den Eingang des entfernten Zählers (2) angeschlossen ist und diesen in den Anfangszustand versetzt, wenn das Rahmenverriegelungswort erkannt wird.

2. Vorrichtung zur Synchronisierung nach Anspruch 1, dadurch gekennzeichnet, daß der Speicher ein Fassungsvermögen von 128 Wörtern zu je 4 Binärzeichen besitzt, daß das Parallelregister (7) und das Ausgangsregister (9) je ein Fassungsvermögen von 4 Binärzeichen besitzen, daß die Binärzeichen vom Eingangsregister (3) parallel in Vierergruppen in das Parallelregister übertragen werden, daß der Schaltkreis (4) zur Auswahl des Schreibzeitpunkts mindestens ein Signal zwischen zwei Übertragungen solcher Vierergruppen vom Eingangsregister (3) in das Parallelregister (7) liefert und daß der Adressierschaltkreis (17) eine Schreibadresse und eine Leseadresse zwischen zwei Übertragungsvorgängen liefert.

3. Vorrichtung zum Synchronisieren nach Anspruch 1, dadurch gekennzeichnet, daß der Schaltkreis (4) zur Auswahl des Schreibzeitpunkts ein Serie-Parallelregister (60) eines Fassungsvermögens von zwei Binärzeichen, das vom entfernten Zähler (2) das Untervielfache der zweiten Ordnung des entfernten Taktsignals unter Steuerung durch das invertierte örtliche Taktsignal sowie das Untervielfache erster Ordnung des vom örtlichen Zähler (1) gelieferten örtlichen Taktsignals zugeführt erhält, einen Dekodierer (61), der ein Signal liefert, wenn die Dekodierung der Ausgänge dieses Serien-Parallelregisters (60) von zwei unterschieden ist, und ein UND-Tor (63) enthält, das ein Signal liefert, wenn das invertierte örtliche Taktsignal, das invertierte Untervielfache erster Ordnung des örtlichen Zählers und das invertierte Ausgangssignal des Dekodierers (61) den Wert Eins anzeigen, wobei das von dem UND-Tor (63) erzeugte Signal das Ausgangssignal des Schaltkreises (4) zur Auswahl des Schreibzeitpunkts bildet.

4. Vorrichtung zum Synchronisieren nach Anspruch 1, dadurch gekennzeichnet, daß der Entscheidungsschaltkreis (5) einen Dekodierer (69), der an den Ausgang des entfernten Zählers (2) angeschlossen ist, und ein Einheitsregister (72) enthält, wobei der Dekodierer ein Signal während der zwei letzten Zeitkanäle, die im Speicher (8) enthalten sind, und der beiden ersten gespeicherten Zeitkanäle liefert, daß das Einheitsregister (72) ein Signal des Wertes Eins zugeführt erhält, wenn der örtliche Zähler die Binärzeichen eines ersten Zeitrahmens im Speicher (8) gezählt hat, und daß das Einheitsregister (72) das Ausgangssignal des Dekodierers (69) zugeführt erhält, wenn der örtliche Zähler die Binärzeichen eines zweiten Zeitrahmens im Speicher gezählt hat, wobei das Einheitsregister (72) ein Signal aussendet, das, wenn es den Wert Null besitzt, die Adressierung des ersten Zeitrahmens im Speicher zuläßt und, wenn es den Wert Eins besitzt, die Adressierung des zweiten Zeitrahmens im Speicher zuläßt.

5. Vorrichtung zum Synchronisieren nach Anspruch 1, dadurch gekennzeichnet, daß der Rahmenverriegelungsschaltkreis (10) einen Adressendekodierer (30), der an den Ausgang des Eingangsregisters (3) angeschlossen ist, einen Festspeicher (32) bestehend aus acht Sektoren mit je sechzehn Wörtern von vier Binärzeichen, wovon sieben Sektoren benutzt werden, wobei die drei höchstgewichteten Binärzeichen mit einem Register (35), dessen Ausgang an einen Adressierschaltkreis (31) des Speichers (32) angeschlossen ist und das geringwertige Binärzeichen mit dem Einheitsregister (38) zur Einstellung des entfernten Zählers (2) in den Anfangszustand verbunden ist, wobei der Adressierschaltkreis (31) ebenfalls an den Dekodierer (30), an ein Bit des Eingangsregisters (3) und an den entfernten Zähler (2) angeschlossen ist, von dem er ein erstes Signal zugeführt erhält, wenn der Zähler einen ungeradzahligen Zeitrahmen zählt, und ein zweites Signal, wenn der Zähler das Abzählen eines Zeitrahmens beendet, wobei die Binärzeichen großer Gewichtung eine Adresse eines Sektors bestimmen und die anderen Verbindungen des Adressierschaltkreises (31) ein Wort in einem Sektor bestimmen und die sieben verwendeten Sektoren unterschiedlichen Zuständen für das Erkennen der Rahmenverriegelung entsprechen.

6. Vorrichtung zum Synchronisieren nach Anspruch 1, dadurch gekennzeichnet, daß der Schaltkreis für die Einspeisung der Nichtparität (6) an ein Binärzeichen des Eingangsregisters (3) angeschlossen ist und vom entfernten Zähler (2) ein Signal empfängt, wenn dieser Zähler von einem geradzahligen zu einem ungeradzahligen Zeitrahmen übergeht, daß der Wert des Binärzeichens des Eingangsregisters (3) an den Speicher (8) der Synchronisiervorrichtung über ein erstes UND-Tor (52) und ein ODER-Tor (55) übertragen wird, wobei das erste UND-Tor (52) abgesehen von den Übergangszeitpunkten von einem geradzahligen zu einem ungeradzahligen Zeitrahmen permanent aktiviert ist, daß ein Einheitsregisters (51) mit seinem Ausgang an einen Eingang eines Exklusiv-ODER-Tores (45) angeschlossen ist, dessen anderer Eingang an das Binärzeichen des Eingangsregisters angeschlossen ist, wobei das Einheitsregister (51) das Ausgangssignal des Exklusiv-ODER-Tores (45) abgesehen von den Zeitpunkten des Übergangs von einem geradzahligen auf einen ungeradzahligen Zeitrahmen empfängt, bei dem es den Wert Eins empfängt, wobei der Wert des Einheitsregisters (51) vor diesem Übergang an das ODER-Tor (55) über ein zweites UND-Tor (54) angelegt wird, das zum Zeitpunkt des Übergangs aktiviert ist und den Wert des vom ersten UND-Tor (52) empfangenen Binärzeichens ersetzt, und wobei der Wert des Einheitsregisters (51), der an das zweite UND-Tor (54) gelangt, so gewählt ist, daß es mit den 511 Werten der vorhergehenden Binärzeichen des Eingangsregisters, die von dem ersten UND-Tor (52) übertragen werden, eine Gruppe bildet, die eine ungerade Zahl von Binärzeichen im Zustand Eins umfaßt.

0 018 618

FIG.1

FIG.2

FIG.3

# FIG.4

# FIG.5